# EUROPEAN PATENT APPLICATION

(11) **EP 4 173 465 A1**
(43) Date of publication of application: **03.05.2023**
(21) Application number: 22192204.0
(22) Date of filing: 04.07.2012
(51) Int. Cl.: A01D 34/74, G01B 3/00, G05D 1/00, A01D 34/00, B60L 1/00, B60L 3/00, B60L 8/00, B60L 15/20, G05D 1/02, B60L 50/52, B60L 50/60, B60L 53/16

(54) **CALIBRATION OF CUTTING HEIGHT FOR A ROBOTIC MOWER**

(62) Divisional of application: 17198526.0
(71) Applicant: Husqvarna AB, 561 82 Huskvarna (SE)
(72) Inventor: BJÖRN, Jonatan, 553 24 Jönköping (SE); STRANDBERG, Stefan, 556 32 Jönköping (SE); HOLGERSSON, Jonas, 561 40 Huskvarna (SE); ELONSSON, Martin, 561 92 Huskvarna (SE)

(57) **Abstract**

A robotic mower comprises a chassis; a cutting motor driving at least one cutting blade; and a height adjustment assembly including a height adjustment motor (140) configured to adjust a height of a motor bracket (100) via rotation of a height adjustment screw (136) driven by the height adjustment motor (140), the motor bracket (100) providing structural support for the cutting motor at an adjustable level relative to the chassis.

## Description

### TECHNICAL FIELD

Example embodiments generally relate to robotic mowers and, more particularly, relate to a calibration system for a robotic mower that has an adjustable cutting height.

### BACKGROUND

Yard maintenance tasks are commonly performed using various tools and/or machines that are configured for the performance of corresponding specific tasks. Certain tasks, like grass cutting, are typically performed by lawn mowers. Lawn mowers themselves may have many different configurations to support the needs and budgets of consumers. Walk-behind lawn mowers are typically compact, have comparatively small engines and are relatively inexpensive. Meanwhile, at the other end of the spectrum, riding lawn mowers, such as lawn tractors, can be quite large. More recently, robotic mowers and/or remote controlled mowers have also become options for consumers to consider.

Lawn mowers are typically capable of transiting over even and uneven terrain to execute yard maintenance activities relating to mowing. However, most lawn mowers are repeatedly exposed to the same operating environments over the course of their lifetimes. For example, a lawn mower may operate to cut a single yard over its entire life, or may operate to cut a relatively fixed series of yards or parcels if it is used for commercial purposes. Given that computing devices are becoming more ubiquitous, it is to be expected that they may be employed to assist in operation of lawn mowers. As such, many additional functionalities may be provided or supported by the employment of computing devices on lawn mowers.

### BRIEF SUMMARY OF SOME EXAMPLES

Some example embodiments may therefore provide a robotic device having control circuitry that can be used in connection with accurately setting the cutting height of the device. In this regard, for example, the control circuitry may control a height adjustment motor and may utilize information indicative of the number of revolutions of a height adjustment screw to determine cutting height. However, some embodiments may enable the cutting height to be accurately determined using a calibration system. Moreover, in some cases, a clutch may be employed to selectively decouple the height adjustment screw from the height adjustment motor.

According to one example embodiment, a robotic mower is provided. The robotic mower may include a chassis, a cutting motor driving at least one cutting blade, a height adjustment assembly and control circuitry. The height adjustment assembly may include a height adjustment motor configured to adjust a height of a motor bracket via rotation of a height adjustment screw driven by the height adjustment motor. The motor bracket may provide structural support for the cutting motor at an adjustable level relative to the chassis. The control circuitry may be configured to control operation of the height adjustment motor for positioning of the motor bracket based at least in part on information received by the control circuitry. The received information may be indicative of an amount of rotation of the height adjustment screw.

According to another example embodiment, a height adjustment assembly for a robotic mower is provided. The robotic mower may include a chassis, a cutting motor driving at least one cutting blade, and control circuitry. The height adjustment assembly may include a motor bracket, a height adjustment screw and a height adjustment motor. The motor bracket may provide structural support for the cutting motor at an adjustable level relative to the chassis. The height adjustment screw may be operably coupled to the motor bracket and support the motor bracket at the adjustable level. The height adjustment motor may be configured to drive rotation of the height adjustment screw to adjust motor bracket position. The control circuitry may be configured to control operation of the height adjustment motor for positioning of the motor bracket based at least in part on information received by the control circuitry. The received information may indicative of an amount of rotation of the height adjustment screw.

In another example embodiment, a method of adjusting cutting height for a robotic mower is provided. The method includes providing a motor bracket that has an adjustable level relative to a chassis of the robotic mower to structurally support a cutting motor of the robotic mower. The motor bracket may be supported by a height adjustment screw that is rotatable to adjust the level of the motor bracket. The method may further include monitoring rotation of the height adjustment screw to generate information indicative of an amount of rotation of the height adjustment screw and utilizing processing circuitry to control operation of a height adjustment motor operably coupled to rotate the height adjustment screw based on the received information.

Some example embodiments may improve the ability of operators to control the cutting height of an autonomous mowing device.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates an example operating environment for a robotic mower;
FIG. 2A illustrates a schematic view of a lower chassis and various components of the robotic mower according to an example embodiment;
FIG. 2B illustrates a schematic view of an upper chassis and various other components of the robotic mower according to an example embodiment;
FIG. 3 illustrates a side view of a portion of a robotic mower employing such a linear bearing assembly according to an example embodiment;
FIG. 4 illustrates a perspective view of some components of a calibration system for automatic cutting height adjustment according to an example embodiment;
FIG. 5 illustrates a perspective view of the calibration system including the height sensor according to an example embodiment;
FIG. 6 illustrates a partially cutaway view of the underside of a screw gear according to an example embodiment;
FIG. 7 illustrates the partially cutaway view of FIG. 6 with a spring added to hold a connection pin in a slot according to an example embodiment;
FIG. 8 illustrates an isolated side view of the height adjustment screw to show stops according to an example embodiment;
FIG. 9 illustrates an isolated front view of the screw engagement nut to show teeth disposed thereon according to an example embodiment;
FIG. 10 illustrates an example in which a partial tooth at the top of the screw engagement nut has reached the stop at the top of the height adjustment screw according to an example embodiment;
FIG. 11 illustrates a block diagram of various components of control circuitry of the robotic mower to illustrate some of the components that enable the functional performance of the robotic mower according to an example embodiment; and
FIG. 12 illustrates a block diagram of a method of adjusting cutting height for a robotic mower according to an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other.

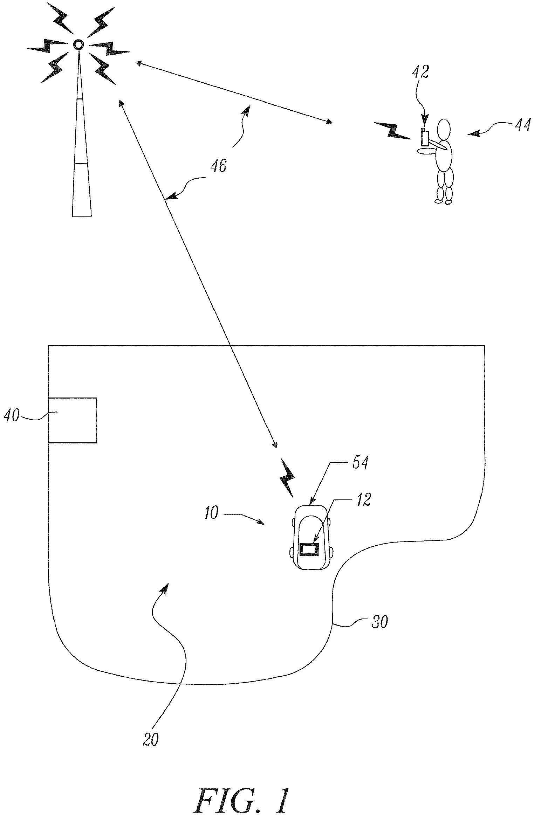

Robotic vehicles such as robotic mowers, robotic watering devices, and/or the like, typically operate in an area that is defined by any boundary that can be technically or physically defined. In one example, a technical means by which to define such a boundary may include a guide wire that bounds the area to be mowed. The robotic vehicle then roams within the bounded area to ensure that the entire area is mowed, watered, etc., but the robotic vehicle does not go outside of the bounded area. FIG. 1 illustrates an example operating environment for a robotic mower 10 that may employ a system bounded by such a guide wire. The robotic mower 10 may operate to cut grass on a parcel 20 (i.e., a land lot), the boundaries of which may be defined using one or more physical boundaries (e.g., a fence, wall, curb and/or the like), a guide wire 30 or combinations thereof. The guide wire 30 may emit electrical signals that are detectable by the robotic mower 10 to inform the robotic mower 10 when a boundary of the parcel 20 has been reached. The robotic mower 10 may be controlled, at least in part, via control circuitry 12 located onboard. The control circuitry 12 may include, among other things, the ability to detect the guide wire 30 to redirect the robotic mower 10 to other areas within the parcel 20.

In an example embodiment, the robotic mower 10 may be battery powered via one or more rechargeable batteries. Accordingly, the robotic mower 10 may be configured to return to a charge station 40 that may be located at some position on the parcel 20 in order to recharge the batteries. The batteries may power a drive system and a blade control system of the robotic mower 10. However, the control circuitry 12 of the robotic mower 10 may selectively control the application of power or other control signals to the drive system and/or the blade control system to direct the operation of the drive system and/or blade control system. Accordingly, movement of the robotic mower 10 over the parcel 20 may be controlled by the control circuitry in a manner that enables the robotic mower 10 to systematically traverse the parcel 20 while operating a cutting blade to cut the grass on the work area of the parcel 20.

In some embodiments, the operator of the robotic mower 10 may be configured to communicate wirelessly with an electronic device 42 (e.g., a computer, mobile telephone, PDA, smart phone, and/or the like) of a remote operator 44 via a wireless communication network 46. However, the wireless network 46 and other remote devices may not be employed in some embodiments. If employed, the wireless network 46 may be a data network, such as a local area network (LAN), a metropolitan area network (MAN), a wide area network (WAN) (e.g., the Internet), and/or the like, which may couple the robotic mower 10 to devices such as processing elements (e.g., personal computers, server computers or the like) or databases. Communication between the wireless network 46 and the devices or databases (e.g., servers, electronic device 42, control circuitry 12, etc.) may be accomplished by either wireline or wireless communication mechanisms and corresponding protocols.

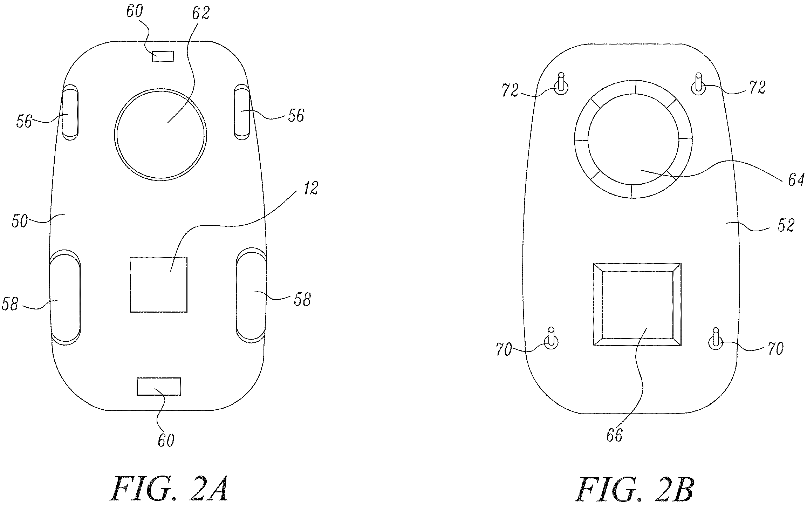

FIG. 2, which includes FIGS. 2A and 2B, illustrates some of the parts that may be employed in connection with an example of the robotic mower 10. However, it should be appreciated that example embodiments may be employed on numerous other vehicles that may employ different designs. FIG. 2A illustrates a schematic view of a lower chassis and various components of the robotic mower according to an example embodiment and FIG. 2B illustrates a schematic view of an upper chassis and various other components of the robotic mower according to an example embodiment.

Referring to FIGS. 1 and 2, the robotic mower 10 may include a lower chassis 50, an upper chassis 52 and a body 54. The upper chassis 52 may be configured to be arranged on top of the lower chassis 50 and the body 54 may be configured to be arranged on top of the upper chassis 52. The lower chassis 50 may form a support structure from which one or more front wheels 56 and one or more rear wheels 58 may be supported. In some embodiments, the one or more rear wheels 58 may be relatively large as compared to the one or more front wheels 56. Moreover, the one or more rear wheels 58 may be configured to operate either in a forward or backward direction. In some embodiments, the front wheels 56 may be pivoting wheels.

In an example embodiment, the lower chassis 50 may further include one or more sensors 60 that may be used to detect the guide wire 20 and/or objects that may form part of the boundary of the parcel. The sensors 60 may also detect objects that may be encountered during operation of the robotic mower 10 within the boundaries of the parcel 20. These objects may be fixed or temporary (e.g., movable) objects. In some cases, the sensors 60 may include a front sensor and a rear sensor. However, it should be appreciated that any number of sensors may be employed and they may be disposed at any desirable location on the robotic mower 10. The sensors 60 may include sensors related to positional determination (e.g., a GPS receiver, an accelerometer, a camera, a radar transmitter/detector, an ultrasonic sensor, a laser scanner and/or the like). Thus, for example, positional determinations may be made using GPS, inertial navigation, optical flow, radio navigation, visual location (e.g., VSLAM) and/or other positioning techniques or combinations thereof. Accordingly, the sensors 60 may be used, at least in part, for determining the location of the robotic mower 10 relative to boundaries or other points of interest (e.g., a starting point, the guide wire or other key features) of the parcel 20, or determining a position history or track of the robotic mower 10 over time.

The lower chassis 50 may further support a cutting motor 62 configured to drive a cutting blade or other cutters of the robotic mower 10. In some embodiments, the body 54 and the upper chassis 52 may be plastic, light metal, or other similarly lightweight components. The upper chassis 52 and/or the body 54 may support a user interface (e.g., display 66). The display 66 may be employed to interface with the control circuitry 12 for controlling operations of the robotic mower 10.

In some embodiments, the sensors 60 may include sensors specifically provided for detecting objects (other than the guide wire 20 or objects forming boundaries of the parcel 20) and/or sensors for detecting lifting (or tipping beyond a threshold amount) of the robotic mower 10. Alternatively, separate sensors (e.g., collision sensors 70 and lifting sensors 72) may be provided for each function, and those sensors may be capable of communicating with the control circuitry 12 in addition to the sensors 60. In an example embodiment, the sensors 60 may include a camera, which may be used to optically determine the existence of objects in view of the camera and, in some embodiments, may be configured to determine or distinguish an identity of the object (e.g., to determine if an object is a reference object).

In some embodiments, the cutting height at which the robotic mower 10 operates may be adjustable. In some cases, adjustment of the cutting height may be accomplished by adjusting the height of the blade or blades that perform the cutting operation. One mechanism for adjusting blade height could include an apparent lengthening or shortening of the shaft to which the blade or blades are mounted. However, in practice, this may be difficult to accomplish. Thus, some embodiments may instead employ a fixed length for the shaft and enable adjustment of the vertical position of the cutting motor 62, the shaft and the cutting blade or blades relative to a fixed part of the chassis of the robotic mower 10. In other words, the entirety of the cutting system may be linearly adjustable in a substantially vertical direction by mounting the cutting system on a linear bearing assembly. The linear bearing assembly may then support adjustment of the height of the cutting system via operation of a cutting height adjustment motor that may be controlled at least in part via the control circuitry 12.

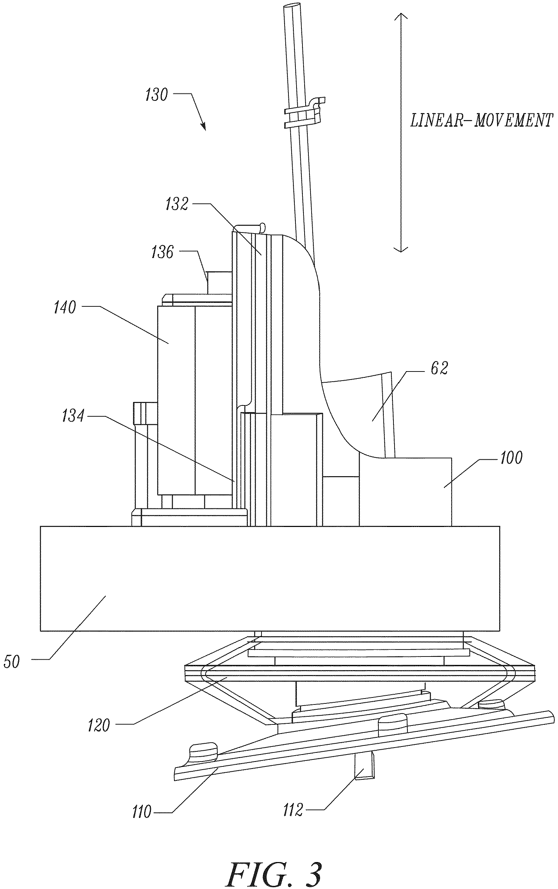

FIG. 3 illustrates a side view of a portion of a robotic mower employing such a linear bearing assembly according to an example embodiment. In this regard, for example, FIG. 3 illustrates the lower chassis 50 forming a fixed part of the chassis of the robotic mower 10. The lower chassis 50 supports a motor bowl 100 (e.g., motor bracket, motor mount, or motor fixing) that supports the cutting motor 62. In this regard, the motor bowl 100 of an example embodiment provides structural support for the cutting motor 62 at an adjustable elevation or height relative to the ground beneath the robotic mower 10. A cutting disc 110 is disposed at the end of a shaft 112 that is turned by the cutting motor 62 and extends linearly therefrom in a direction toward an underside of the robotic mower 10. In some embodiments, a bellows 120 may be disposed between the cutting disc 110 and the lower chassis 50 to prevent moisture and/or debris from fouling the cutting motor 62 or other internal components of the robotic mower 10.

The motor bowl 100 may be operably coupled to a height adjustment assembly 130 to provide for the adjustable elevation characteristic of the motor bowl 100. The height adjustment assembly 130 may include components that enable the motor bowl 100 to be elevated or lowered relative to the lower chassis 50 within a predefined range in order to control the cutting height of the robotic mower 10. As such, the motor bowl 100 provides a structure to support the cutting motor 62 at an adjustable level relative to the ground and the chassis (e.g., lower chassis 50) of the robotic mower 10. In an example embodiment, the height adjustment assembly 130 may include linear bearings 132 with which a portion of the motor bowl 100 is slideably engaged. For example, the motor bowl 100 may have a rack assembly 134 attached thereto in order to enable the rack assembly 134 to ride within grooves of a height adjustment screw 136 (or worm gear). In some cases, the rack assembly 134 may be fixed to the motor bowl 100, but may ride in the linear bearings 132 to enable a height adjustment to be accomplished via raising or lowering of the rack assembly 134 responsive to turning of the height adjustment screw 136. In an example embodiment, a height adjustment motor 140 may be provided to turn the height adjustment screw 136. The height adjustment motor 140 may be an electric motor that may receive control inputs at least in part via the control circuitry 12.

During operation, the control circuitry 12 may provide a signal to the height adjustment motor 140 to adjust the height of the cutting disc 110. The height adjustment motor 140 may operate accordingly to turn the height adjustment screw 136. Turning of the height adjustment screw 136 may cause threads on the height adjustment screw 136 to be passed through slots between teeth of the rack assembly 134. Dependent upon the direction of rotation of the height adjustment screw 136, the rack assembly 134 may receive a lifting force or lowering force and the motor bowl 100 may slide within the linear bearings 132 in a corresponding direction to adjust the height of the cutting disc 110 and thereby also adjust the height of the grass that is cut by the robotic mower 10.

In some cases, rather than adjusting blade height and then operating the robotic mower 10 to observe the cutting height to make cutting height adjustments based on lowering or raising the cutting height from the observed level, it may be desirable to simply define a specific cutting height and have the robotic mower 10 adjust its cutting disc 110 to the corresponding desired height. To make such an adjustment, an input may be provided to the control circuitry 12 and the control circuitry 12 may direct movement of the height adjustment motor 140 to achieve a desired cutting height based on predefined information correlating a desired cutting height to a determinable position of some components of the robotic mower 10. For example, a two inch cutting height may be correlated to a certain motor bowl 100 height. Thus, some example embodiments may provide structural components and corresponding methods of employing those components in order to determine a motor bowl 100 height and further to associate a given motor bowl 100 height with a cutting height. However, since the robotic mower 10 operates in relatively harsh conditions, it is possible that component slippage, electrical fluctuations, or other irregularities may be encountered that could impact the accuracy of such readings. Accordingly, some embodiments may further employ a calibration system to enable the robotic mower 10 to maintain an accurate accounting for cutting height.

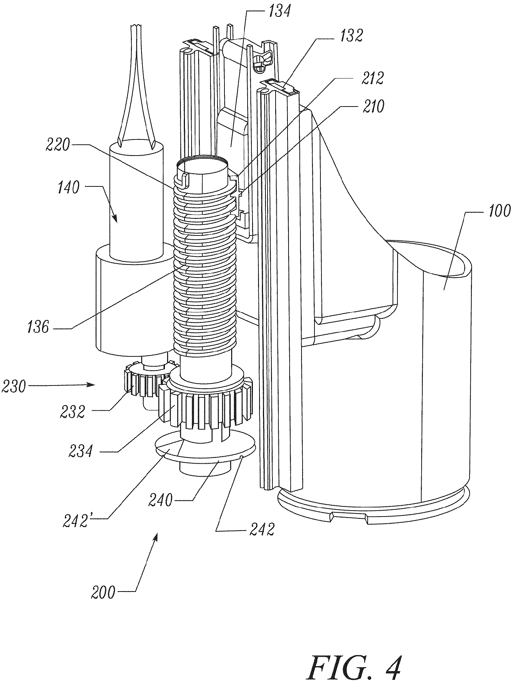

FIG. 4 illustrates a perspective view of some components of a calibration system 200 for automatic cutting height adjustment according to an example embodiment. FIG. 4 is depicted such that many surrounding components are removed in order to give a clearer view of the calibration system 200. However, it should be appreciated that the calibration system 200 may include or interact with other components that are not shown in FIG. 4.

FIG. 4 shows the rack assembly 134 of FIG. 3 in greater detail and illustrates a screw engagement nut 210 that includes multiple teeth 212 that are configured to engage threads 220 of the height adjustment screw 136. The teeth 212 may be spaced apart and sized to ride within the threads 220 such that turning of the height adjustment screw 136 causes the screw engagement nut 210 to be translated along the height adjustment screw 136 accordingly and to thereby adjust the height of the motor bowl 100, which is supported vertically via the linear bearings 132 at a height that is determined by the position of the screw engagement nut 210 relative to the height adjustment screw 136.

The height adjustment screw 136 is arranged such that an axis of the height adjustment screw 136 is substantially parallel to the direction of linear movement of the motor bowl 100 when height adjustments are made. Thus, the height adjustment screw 136 itself does not move vertically. Instead, the height adjustment screw 136 rotates about its axis but maintains a constant vertical orientation. To cause the rotation of the height adjustment screw 136, motion may be transferred from rotation of a shaft of the height adjustment motor 140 to the height adjustment screw 136. In an example embodiment, a gear assembly 230 may be employed to transfer rotation of the shaft of the height adjustment motor 140 to the height adjustment screw 136.

In an example embodiment, the gear assembly 230 may include a motor gear 232 operably coupled to the shaft of the height adjustment motor 140. In some cases, the motor gear 232 may be affixed to the shaft. The motor gear 232 may therefore turn with the shaft responsive to operation of the height adjustment motor 140. The motor gear 232 may include teeth that are operably coupled to corresponding teeth of a screw gear 234. The screw gear 234 may be operably coupled to the height adjustment screw 136. Accordingly, turning of the motor gear 232 may be translated into corresponding turning of the screw gear 234. Relative sizes of the motor gear 232 and the screw gear 234 may be adjusted to provide any desirable turning ratio such that rotation of the motor gear 232 at a given speed may result in a relatively faster rotation of the screw gear 234 (e.g., if the screw gear 234 is smaller than the motor gear 232) or result in relatively slower rotation of the screw gear 234 (e.g., if the screw gear 234 is larger than the motor gear 232).

Some methods for making a determination as to the cutting height may include the attachment of a rod or other elongate member onto the motor bowl 110 and having a portion of the rod pass through a scale that is visible external to the robotic mower 10. The rod may have a marking that points to a value on the scale and indicates the cutting height. Although this type of height determination may be useful for enabling an operator to see the cutting height, it is not particularly useful when automatic control is desired. Accordingly, in some embodiments, a determination regarding cutting height may be made in a manner that enables the control circuitry 12 to be aware of cutting height and/or provide inputs regarding specific settings for cutting height.

One way to enable the control circuitry 12 to be aware of cutting height may be to measure cutting height on the basis of the number of revolutions that the height adjustment screw 136 has made from a known or reference location. Thus, for example, the number of revolutions made by the height adjustment screw 136 may be monitored either directly or indirectly. Direct monitoring may include monitoring of the height adjustment screw 136 itself, while indirect monitoring may include monitoring of a component known to turn at a fixed rate relative to the turning of the height adjustment screw 136. Thus, for example, the number of revolutions of the motor gear 232 could be monitored and the corresponding number of revolutions of the screw gear 234 may be determined (e.g., based on the gear ratio between the motor gear 232 and the screw gear 234) as an example of indirect monitoring.

In an example embodiment, direct monitoring may be performed by marking the height adjustment screw 136, or by fixing a marked reference wheel 240 to the height adjustment screw 136 and monitoring the number of revolutions of the reference wheel 240. In an example embodiment, the reference wheel 240 may include one or more slots 242 (or other markings including, for example, transparent window 242') disposed along the reference wheel 240. In some cases, the slots 242 may be provided at fixed and known intervals. For example, a single slot could be provided to indicate one full revolution. Alternatively, two slots could be provided to indicate half revolutions. As yet another alternative, four slots could be provided to indicate quarter revolutions. Moreover, any number of slots could be provided to indicate any desirable degree of accuracy relative to determining partial revolutions of the height adjustment screw 136.

In some embodiments, the slots 242 may have different characteristics (e.g., shape, color, size, etc.) to enable the characteristics to be differentiated and thereby indicate specific information relative to the motion of the height adjustment screw 136. For example, by determining the characteristics of the slots 242 encountered (or the order of encountering slots having certain characteristics), the direction of rotation of the height adjustment screw 136 may be determined. Additionally or alternatively, slots at certain positions may have corresponding certain characteristics so that a slot of a certain shape, color or size can be recognized as indicating that a quarter turn has been achieved, while a slot of a different shape, color or size may be recognized as indicating that a half turn has been achieved. By counting the number of revolutions and/or the fractions of full revolutions that have been made from a known reference, the control circuitry 12 may determine the cutting height.

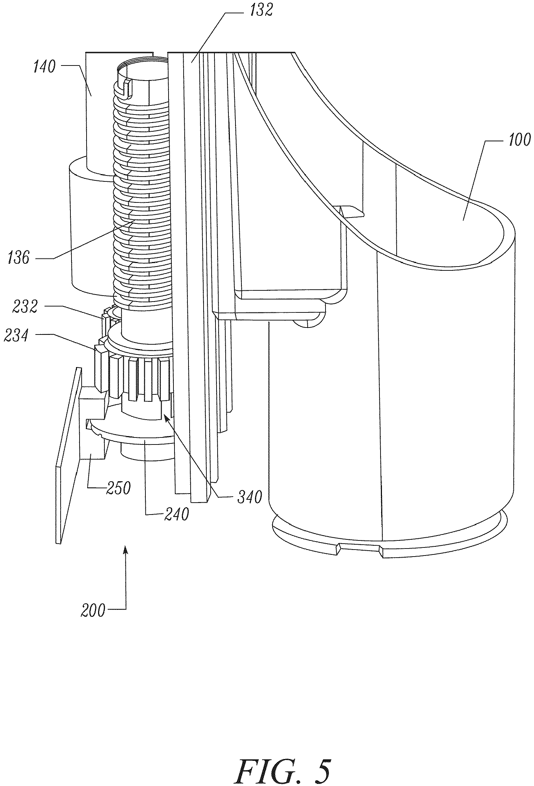

In an example embodiment, a height sensor 250 may be provided to detect markings on the reference wheel 240. FIG. 5 illustrates a perspective view of the calibration system 200 including the height sensor 250 according to an example embodiment. The height sensor 250 may be an optical sensor that can optically read markings, transparent windows or slots on the reference wheel 240. An example of a detectable transparent window 242', which may be employed instead of or in addition to one of the slots 242, is shown in FIG. 4. However, in other embodiments, the height sensor 250 may be a magnetic device that detects slots, magnets or other markings on the reference wheel 240 as they pass by the height sensor 250. In other embodiments, the height sensor 250 may include mechanical components for detecting slots 242. Accordingly, the height sensor 250 may be embodied in any of a variety of devices capable of determining the existence of a marking, transparent window, slot or the like on the reference wheel 240 and, in some cases, also determining characteristics of a marking, transparent window, slot or the like on the reference wheel 240.

The height sensor 250 may be in communication with the control circuitry 12 to inform the control circuitry 12, for example, when a marking is encountered and, if appropriate, any characteristics of the marking that were determined. The control circuitry 12 may then determine cutting height on the basis of the information received. In some embodiments, the control circuitry 12 may be configured to determine current motor bowl 100 height, and therefore also the cutting height, based on counting a number of revolutions of the height adjustment screw 136 relative to a known location. In an example embodiment, the known location may be defined at one or both of the ends of the range of travel of the screw engagement nut 210 along the height adjustment screw 136. Thus, for example, when the screw engagement nut 210 is at either the top or the bottom of the height adjustment screw 136, the control circuitry 12 may use any information received thereafter regarding height adjustment screw 136 rotation as information that is indicative of the cutting height of the robotic mower 10.

In some embodiments, in order to provide a consistently accurate height measurement, any cutting height adjustment or setting may be made responsive to an initial movement of the screw engagement nut 210 to either the top or the bottom of the height adjustment screw 136. The movement of the screw engagement nut 210 to either the top or the bottom of the height adjustment screw 136 may essentially reset the position information to a known reference location. Rotation thereafter may therefore be in an unambiguously determinable direction (e.g., down if the reset was to the top of the height adjustment screw 136 or upward if the reset was to the bottom of the height adjustment screw 136). Having a known reference starting point, the height sensor 250 may monitor the markings encountered during rotation of the height adjustment screw 136. The control circuitry 12 may be configured to determine (or set) the current cutting height based on monitoring the revolutions of the height adjustment screw 136 since each full revolution from one end of the range of motion of the screw engagement nut 210 (e.g., from the top to the bottom of the height adjustment screw 136) may have a known correlation to cutting height. Thus, for example, if the operator selects a specific cutting height, the control circuitry 12 may direct the height adjustment motor 140 to turn until the screw engagement nut 210 is raised to the top (or bottom) of the height adjustment screw 136 and then lower (or raise) the screw engagement nut 210 while counting the number of revolutions (or partial revolutions) based on the markings detected by the height sensor 250 after the extremity of the range is reached.

As an alternative to essentially resetting the initial location for each selected cutting height entered into the processing circuitry 12, the processing circuitry 12 may be configured to remember a last entered cutting height. Thus, any adjustment to cutting height or newly entered cutting height may be achieved with reference to the last entered cutting height. For example, if a particular cutting height is initially selected and the height adjustment motor 140 turns until the screw engagement nut 210 is raised from the top (or bottom) of the height adjustment screw 136 to the selected height based on a determination that the number of revolutions (or partial revolutions) of the height adjustment screw 136 corresponds to the initially selected height, the processing circuitry 12 may store information indicative of the corresponding initially selected height and/or the number of revolutions (or partial revolutions). If an adjustment to the initially selected height is then made, the processing circuitry 12 may reference the current cutting height and the number of revolutions and turn the height adjustment screw 136 an additional number of turns (or partial turns) in an appropriate direction to achieve the height desired according to the adjustment.

In an example embodiment, since some scenarios of operation may cause the height engagement screw 136 to be repeatedly turned with the intention of moving the screw engagement nut 210 to the top or bottom of the height adjustment screw 136, there may be potential for damaging the height adjustment motor 140 or other components when a limit to the movement range is reached. To prevent any such damage, some embodiments may utilize a clutch 300 in connection with the screw gear 234.

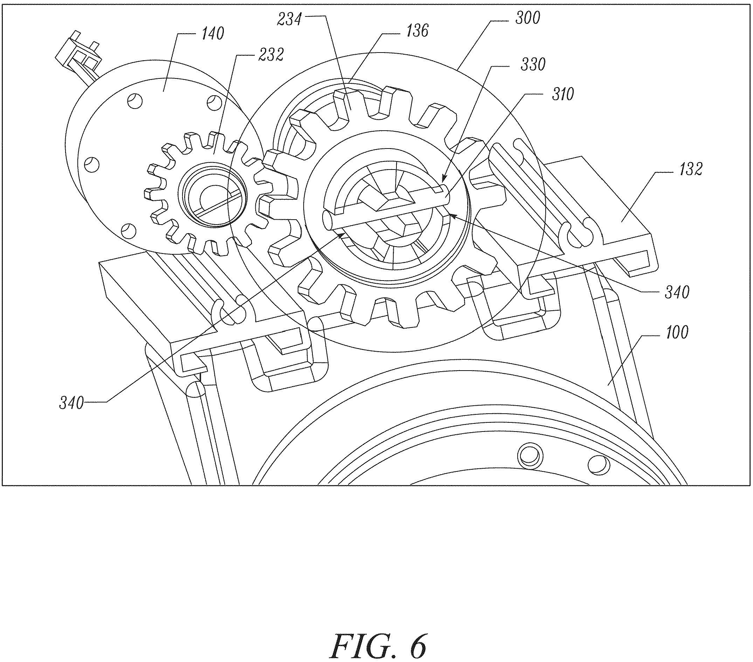

FIG. 6 illustrates a partially cutaway view of the underside of the screw gear 234 according to an example embodiment. The clutch 300 of FIG. 6 may be embodied in the form of a releasable connection between the screw gear 234 and the height adjustment screw 136. In this regard, the clutch 300 may include a connecting pin 310 that is in fixed connection with the screw gear 234, but releasable connection with the height adjustment screw 136. The fixed connection between the connecting pin 310 and the screw gear 234 may be provided by the connecting pint 310 being fit within a slot 330 in an interior portion of the screw gear 234. Thus, the connecting pin 310 may sit perpendicular to an axis of rotation of the screw gear 234 and extend transversely across the screw gear 234. The releasable connection between the connecting pin 310 and the height adjustment screw 136 may be provided by enabling the connecting pin 310 to slide out of a slot 340 defined in the height adjustment screw 136.

As shown in FIG. 6, the slot 340 may extend entirely through a portion of the height adjustment screw 136 so that when the connecting pin 310 is seated both in the slot 330 of the screw gear 234 and the slot 340 of the height adjustment screw 136, rotation of the screw gear 234 is translated directly into corresponding rotation of the height adjustment screw 136. However, the connecting pin 310 may be enabled to move out of the slot 340 of the height adjustment screw 136 responsive to the exertion of a predetermined amount of force on the connecting pin 310.

The predetermined amount of force may be achieved when one of the range limitations for movement of the screw engagement nut 210 along the height adjustment screw 136 is reached. Thus, for example, the releasable connection between the connecting pin 310 and the height adjustment screw 136 may be activated to remove the connecting pin 310 from to slot 340 when the screw engagement nut 210 can no longer be moved further up or down the height adjustment screw 136. In an example embodiment, stops may be provided on the height adjustment screw 136 so that a force is generated to counteract the turning force of the height adjustment screw 136 as provided by the height adjustment motor 140 via the gear assembly 230 responsive to the screw engagement nut 210 hitting one of the stops. When the force generated exceeds a predetermined or threshold amount of force, the connecting pin 310 may come out of the slot 340 to decouple the height adjustment screw 136 from the screw gear 234.

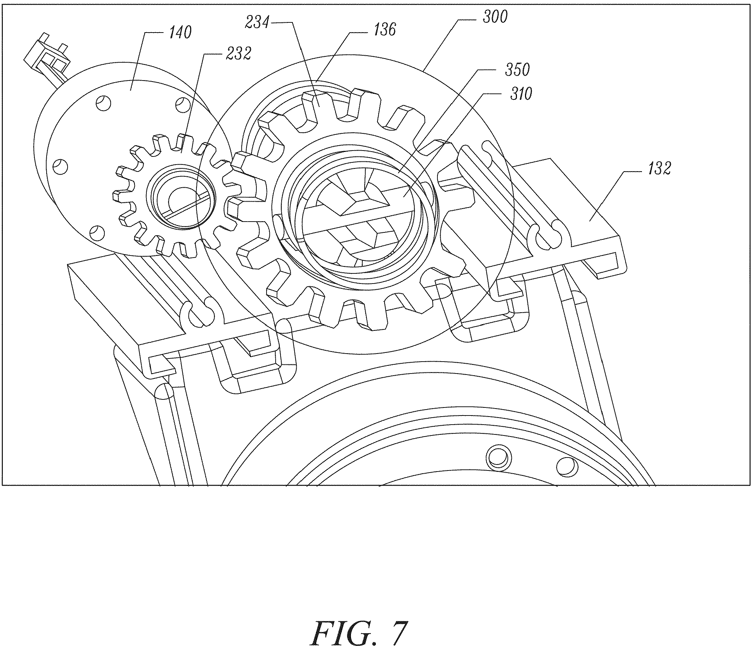

In an example embodiment, the connecting pin 310 may be held into the slot 340 by a spring 350 that is shown in FIG. 7, which shows the same view as FIG. 6 except that the spring 350 is added. The spring 350 may be configured to hold the connecting pin 310 into the slot 340 with the predetermined amount of force. Thus, when the screw engagement nut 210 hits one of the stops, the force exerted by the spring 350 to hold the connecting pin 310 in the slot 340 is overcome and the connecting pin 310 comes out of the slot 340 decoupling the screw gear 234 and the height adjustment screw 136 so that the screw gear 234 may continue to turn responsive to input from the height adjustment motor 140, but the height adjustment screw 136 will not turn. The connecting pin 310, responsive to continued turning of the screw gear 234 may then continue to turn with the screw gear 234, but may not reseat itself into the slot 340 until movement in the other direction is initiated. When movement in the other direction is initiated, the force of the spring 350 may be sufficient to seat the connecting pin 310 in the slot 340 when the orientation of the connecting pin 310 is aligned with the slot 340.

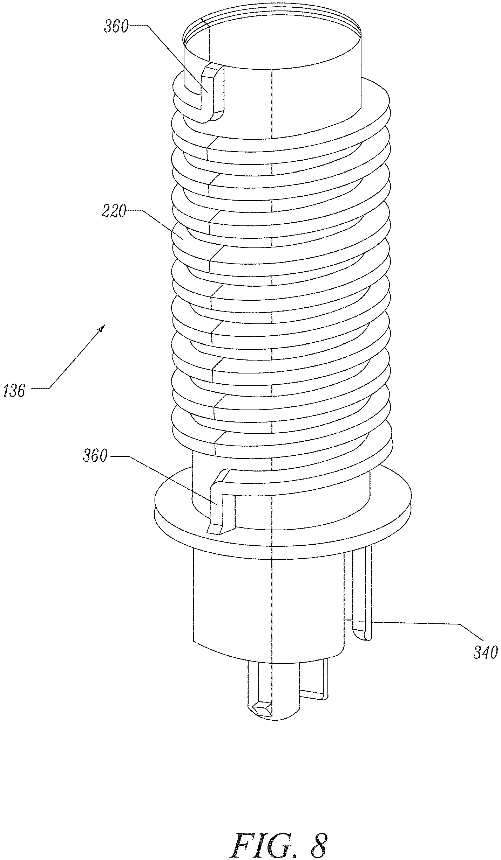

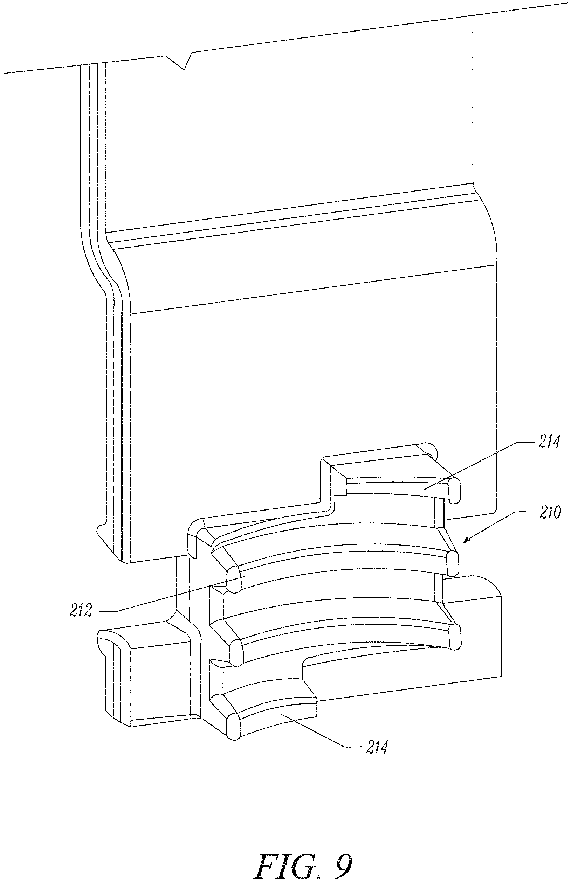

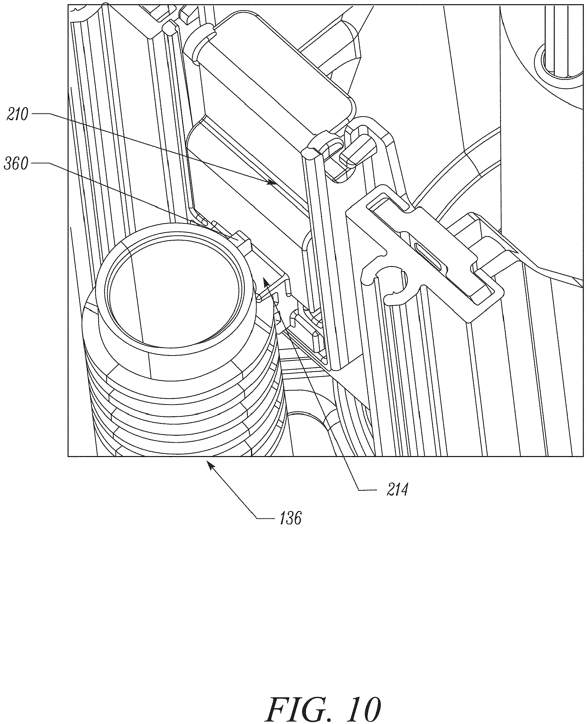

FIG. 8 illustrates an isolated side view of the height adjustment screw 136 to show the stops 360. FIG. 9 illustrates an isolated front view of the screw engagement nut 210 to show the teeth 212 disposed thereon. The teeth 212 may include a partial tooth 214 on both a top part of the screw engagement nut 210 and a bottom part thereof. When the partial tooth 214 (at the top or bottom of the screw engagement nut 210) hits one of the stops 360 responsive to turning of the height adjustment screw 136, a force will be generated to counteract the turning of the height adjustment screw 136, as described above, and when the force is sufficient to overcome the force provided by the spring 350, the screw gear 234 may be decoupled from the height adjustment screw 234. FIG. 10 illustrates an example in which the partial tooth 214 at the top of the screw engagement nut 210 has reached the stop 360 at the top of the height adjustment screw 136.

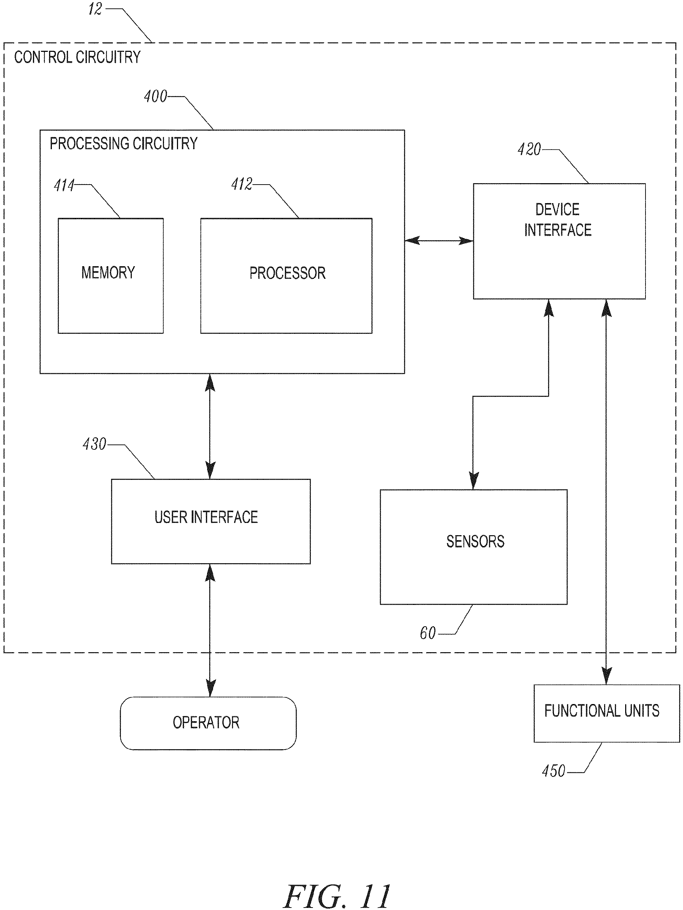

FIG. 11 illustrates a block diagram of various components of the control circuitry 12 to illustrate some of the components that enable the functional performance of the robotic mower 10 and to facilitate description of an example embodiment. In some example embodiments, the control circuitry 12 may include processing circuitry 400 that may be configured to perform data processing, control function execution and/or other processing and management services according to an example embodiment of the present invention. In some embodiments, the processing circuitry 400 may be embodied as a chip or chip set. In other words, the processing circuitry 400 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The processing circuitry 400 may therefore, in some cases, be configured to implement an embodiment of the present invention on a single chip or as a single "system on a chip." As such, in some cases, a chip or chipset may constitute means for performing one or more operations for providing the functionalities described herein.

In an example embodiment, the processing circuitry 400 may include one or more instances of a processor 412 and memory 414 that may be in communication with or otherwise control a device interface 420 and a user interface 430. As such, the processing circuitry 400 may be embodied as a circuit chip (e.g., an integrated circuit chip) configured (e.g., with hardware, software or a combination of hardware and software) to perform operations described herein. However, in some embodiments, the processing circuitry 400 may be embodied as a portion of an on-board computer. In some embodiments, the processing circuitry 400 may communicate with electronic components, motor controllers and/or sensors (e.g., sensors 60, collision sensors 70 and/or lifting sensors 72) of the robotic mower 10 via a single data bus. As such, the data bus may connect to a plurality or all of the switching components and/or other electrically controlled components of the robotic mower 10.

The processor 412 may be embodied in a number of different ways. For example, the processor 412 may be embodied as various processing means such as one or more of a microprocessor or other processing element, a coprocessor, a controller or various other computing or processing devices including integrated circuits such as, for example, an ASIC (application specific integrated circuit), an FPGA (field programmable gate array), or the like. In an example embodiment, the processor 412 may be configured to execute instructions stored in the memory 414 or otherwise accessible to the processor 412. As such, whether configured by hardware or by a combination of hardware and software, the processor 412 may represent an entity (e.g., physically embodied in circuitry - in the form of processing circuitry 400) capable of performing operations according to embodiments of the present invention while configured accordingly. Thus, for example, when the processor 412 is embodied as an ASIC, FPGA or the like, the processor 412 may be specifically configured hardware for conducting the operations described herein. Alternatively, as another example, when the processor 412 is embodied as an executor of software instructions, the instructions may specifically configure the processor 412 to perform the operations described herein.

In an example embodiment, the memory 414 may include one or more non-transitory memory devices such as, for example, volatile and/or non-volatile memory that may be either fixed or removable. The memory 414 may be configured to store information, data, applications, instructions or the like for enabling the robotic mower 10 to carry out various functions in accordance with exemplary embodiments of the present invention. For example, the memory 414 could be configured to buffer input data for processing by the processor 412. Additionally or alternatively, the memory 414 could be configured to store instructions for execution by the processor 412. As yet another alternative, the memory 414 may include one or more databases that may store a variety of data sets responsive to input from the sensor network. Among the contents of the memory 414, applications may be stored for execution by the processor 412 in order to carry out the functionality associated with each respective application.

The device interface 420 may include one or more interface mechanisms for enabling communication with other devices (e.g., sensors of a sensor network including sensors 60, and/or other accessories or functional units 450 such as motors, servos, switches or other operational control devices for automatic responses). Thus, in some embodiments, the device interface 420 may be any means such as a device or circuitry embodied in either hardware, or a combination of hardware and software that is configured to receive and/or transmit data from/to sensors or other internal/external devices in communication with the processing circuitry 400. In some example embodiments, the device interface 420 may provide interfaces for communication of components internal to robotic mower 10 or external to the robotic mower 10 so that the device interface 420 may provide interface capabilities for interaction with such components. Settings, programming and instructions for initiation of automatic responses such as operational control functions that implement automatic actions to be taken responsive to detection of certain stimuli may therefore be provided via the device interface 420.

The user interface 430 (if implemented) may be in communication with the processing circuitry 400 to receive an indication of a user input at the user interface 430 and/or to provide an audible, visual, mechanical or other output to the user. As such, the user interface 430 may include, for example, a display (e.g., display 66), one or more buttons or keys (e.g., function buttons), and/or other input/output mechanisms (e.g., microphone, speakers, cursor, joystick, lights and/or the like).

In an example embodiment, the memory 414 may store instructions for correlating a cutting height to a number of revolutions of the height adjustment screw 136. Accordingly, for example, the processor 412 may execute instructions to determine a current cutting height based on a number of revolutions detected from a reference position using information from the sensor 250. The processor 412 may also be enabled to direct rotation of the height adjustment motor 140 to achieve a desired height based on a known current height or by directing a reset for calibrated positioning as described above.

As indicated above, some embodiments may provide a robotic vehicle (e.g., an autonomously operable robotic mower) that employs a gear assembly to transfer rotational motion from a cutting height adjustment motor to a height adjustment screw. The height adjustment screw may rotate to cause a screw engagement nut to be lifted or lowered (dependent upon the direction of rotation of the height adjustment screw) to raise or lower the cutting height under the control of control circuitry of the robotic vehicle.

In on example embodiment, a robotic mower is provided that may include a chassis, a cutting motor driving at least one cutting blade, a height adjustment assembly and control circuitry. The height adjustment assembly may include a height adjustment motor configured to adjust a height of a motor bowl via rotation of a height adjustment screw driven by the height adjustment motor. The motor bowl may provide structural support for the cutting motor at an adjustable level relative to the chassis. The control circuitry may be configured to control operation of the height adjustment motor for positioning of the motor bowl based at least in part on information received by the control circuitry. The received information may be indicative of an amount of rotation of the height adjustment screw.

The robotic mower described above may further provide that the control circuitry is in communication with a calibration system configured to monitor rotation of the height adjustment screw relative to a reference location. Moreover, the received information may define the amount of rotation of the height adjustment screw relative to the reference location. In some cases, the reference location may be defined at an end of the height adjustment screw. In an example embodiment, the control circuitry may be configured to reset motor bowl height to the end of the height adjustment screw to adjust motor bowl height relative to the reference location each time an adjustment is made to motor bowl height to select a cutting height of the at least one cutting blade.

In some embodiments, the calibration system may include a sensor configured to monitor rotation of the height adjustment screw via detection of at least one marking that rotates proportional to rotation of the height adjustment screw. In some cases, a reference wheel may be provided that rotates with the height adjustment screw. The reference wheel may have the at least one marking disposed thereon and may be disposed proximate to the sensor. In an example embodiment, the reference wheel may include a plurality of markings, each of the markings being indicative of a corresponding fraction of a revolution of the height adjustment screw. In some cases, at least some of the markings may have different characteristics that are determinable by the sensor and the received information may further indicate information specific to a determined characteristic of at least one of the markings.

In an example embodiment, any of the modifications described above may be incorporated along the height adjustment motor being provided to drive a first gear in operable communication with a second gear in operable communication with the height adjustment screw. The operable communication between the height adjustment motor and the first gear, or between the second gear and the height adjustment screw, may be a releasable connection provided via a clutch. Alternatively, the height adjustment motor may drive a first gear in operable communication with a second gear and the second gear may be releasably connected to the height adjustment screw via a connection pin that moves out of a slot in the height adjustment screw responsive to a predetermined amount of force being applied to the connection pin. As yet another alternative, the height adjustment motor may drive a first gear in operable communication with a second gear where the second gear is releasably connected to the height adjustment screw via a spring loaded connection pin that moves out of a slot in the height adjustment screw responsive to a force being applied to the connection pin that is greater than a spring force of the spring being applied to hold the connection pin in the slot.

In some embodiments, the height adjustment assembly further comprises a screw engagement nut operably coupled to the motor bowl. The screw engagement nut may have teeth configured to engage threads of the height adjustment screw and, responsive to rotation of the height adjustment screw, move up or down along a length of the height adjustment screw. In such an example, the height adjustment screw may include at least one stop disposed at an end of a threaded portion of the height adjustment screw. The height adjustment motor may drive a first gear in operable communication with a second gear and the second gear may be releasably connected to the height adjustment screw to release responsive to the screw engagement nut reaching the at least one stop.

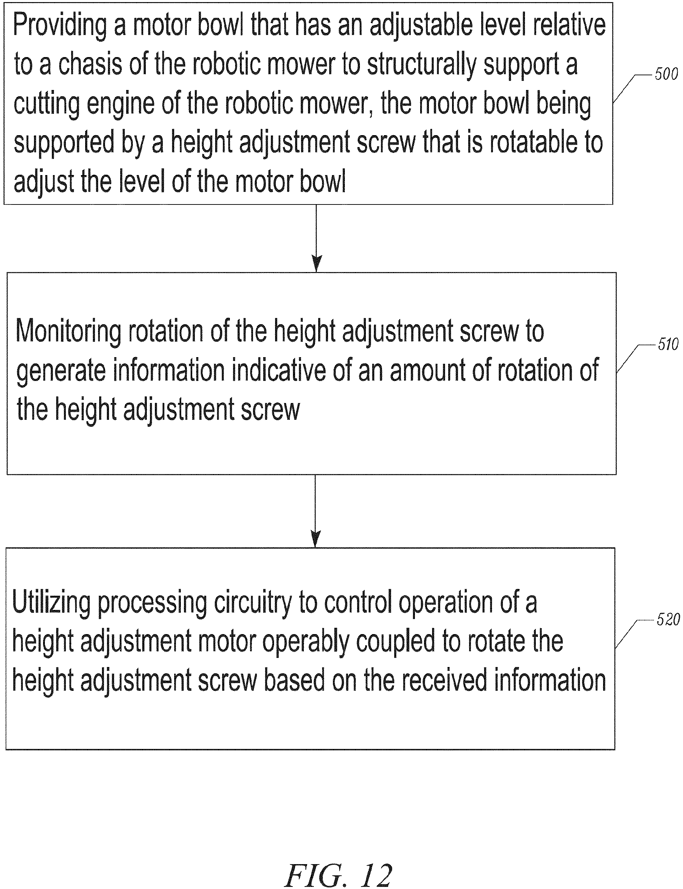

FIG. 12 illustrates a block diagram of a method of adjusting cutting height for a robotic mower according to an example embodiment. The method includes providing a motor bowl that has an adjustable level relative to a chassis of the robotic mower to structurally support a cutting motor of the robotic mower at operation 500. The motor bowl may be supported by a height adjustment screw that is rotatable to adjust the level of the motor bowl. The method may further include monitoring rotation of the height adjustment screw to generate information indicative of an amount of rotation of the height adjustment screw at operation 510 and utilizing processing circuitry to control operation of a height adjustment motor operably coupled to rotate the height adjustment screw based on the received information at operation 520.

### EXAMPLES

1. A robotic mower comprising:
   a chassis;
   a cutting motor driving at least one cutting blade;
   a height adjustment assembly including a height adjustment motor configured to adjust a height of a motor bracket via rotation of a height adjustment screw driven by the height adjustment motor, the motor bracket providing structural support for the cutting motor at an adjustable level relative to the chassis; and
   control circuitry configured to control operation of the height adjustment motor for positioning of the motor bracket based at least in part on information received by the control circuitry, the received information being indicative of an amount of rotation of the height adjustment screw.
2. The robotic mower of example 1, wherein the control circuitry is in communication with a calibration system configured to monitor rotation of the height adjustment screw relative to a reference location, and wherein the received information defines the amount of rotation of the height adjustment screw relative to the reference location.
3. The robotic mower of example 2, wherein the reference location is defined proximate to an end portion of the height adjustment screw.
4. The robotic mower of example 2, wherein the control circuitry is configured to reset motor bracket height to the end of the height adjustment screw to adjust motor bracket height relative to the reference location each time an adjustment is made to motor bracket height to select a cutting height of the at least one cutting blade.
5. The robotic mower of example 2, wherein the calibration system comprises a sensor configured to monitor rotation of the height adjustment screw via detection of at least one marking that rotates proportional to rotation of the height adjustment screw.
6. The robotic mower of example 5, further comprising a reference wheel that rotates with the height adjustment screw, the reference wheel having the at least one marking disposed thereon and being disposed proximate to the sensor.
7. The robotic mower of example 6, wherein the reference wheel comprises a plurality of markings, each of the markings being indicative of a corresponding fraction of a revolution of the height adjustment screw.
8. The robotic mower of example 7, wherein at least some of the markings have different characteristics that are determinable by the sensor and wherein the received information further indicates information specific to a determined characteristic of at least one of the markings.
9. The robotic mower of any one of the preceding examples, wherein the height adjustment motor drives a first gear in operable communication with a second gear in operable communication with the height adjustment screw, and wherein the operable communication between the height adjustment motor and the first gear, or between the second gear and the height adjustment screw, is a releasable connection provided via a clutch.
10. The robotic mower of any of examples 1 to 8, wherein the height adjustment motor drives a first gear in operable communication with a second gear, the second gear being releasably connected to the height adjustment screw via a connection pin that moves out of a slot in the height adjustment screw responsive to a predetermined amount of force being applied to the connection pin.
11. The robotic mower of any of examples 1 to 8, wherein the height adjustment motor drives a first gear in operable communication with a second gear, the second gear being releasably connected to the height adjustment screw via a spring loaded connection pin that moves out of a slot in the height adjustment screw responsive to a force being applied to the connection pin that is greater than a spring force of the spring being applied to hold the connection pin in the slot.
12. The robotic mower of example 1, wherein the height adjustment assembly further comprises a screw engagement nut operably coupled to the motor bracket, the screw engagement nut having teeth configured to engage threads of the height adjustment screw and, responsive to rotation of the height adjustment screw, move up or down along a length of the height adjustment screw.
13. The robotic mower of example 12, wherein the height adjustment screw comprises at least one stop disposed at an end of a threaded portion of the height adjustment screw, and wherein the height adjustment motor drives a first gear in operable communication with a second gear, the second gear being releasably connected to the height adjustment screw to release responsive to the screw engagement nut reaching the at least one stop.
14. A height adjustment assembly for a robotic mower comprising a chassis, a cutting motor driving at least one cutting blade, and control circuitry, the height adjustment assembly comprising:
   a motor bracket providing structural support for the cutting motor at an adjustable level relative to the chassis;
   a height adjustment screw operably coupled to the motor bracket and supporting the motor bracket at the adjustable level; and
      a height adjustment motor configured to drive rotation of the height adjustment screw to adjust motor bracket position,
      wherein the control circuitry is configured to control operation of the height adjustment motor for positioning of the motor bracket based at least in part on information received by the control circuitry, the received information being indicative of an amount of rotation of the height adjustment screw.
15. The height adjustment assembly of example 14, wherein the control circuitry is in communication with a calibration system configured to monitor rotation of the height adjustment screw relative to a reference location, and wherein the received information defines the amount of rotation of the height adjustment screw relative to the reference location.
16. The height adjustment assembly of example 15, wherein the reference location is defined proximate to an end portion of the height adjustment screw.
17. The height adjustment assembly of example 15, wherein the control circuitry is configured to reset motor bracket height to the end of the height adjustment screw to adjust motor bracket height relative to the reference location each time an adjustment is made to motor bracket height to select a cutting height of the at least one cutting blade.
18. The height adjustment assembly of example 15, wherein the calibration system comprises a sensor configured to monitor rotation of the height adjustment screw via detection of at least one marking that rotates proportional to rotation of the height adjustment screw.
19. The height adjustment assembly of example 18, further comprising a reference wheel that rotates with the height adjustment screw, the reference wheel having the at least one marking disposed thereon and being disposed proximate to the sensor.
20. The height adjustment assembly of example 19, wherein the reference wheel comprises a plurality of markings, each of the markings being indicative of a corresponding fraction of a revolution of the height adjustment screw.
21. The height adjustment assembly of example 20, wherein at least some of the markings have different characteristics that are determinable by the sensor and wherein the received information further indicates information specific to a determined characteristic of at least one of the markings.
22. The height adjustment assembly of any one examples 14 to 21, wherein the height adjustment motor drives a first gear in operable communication with a second gear in operable communication with the height adjustment screw, and wherein the operable communication between the height adjustment motor and the first gear, or between the second gear and the height adjustment screw, is a releasable connection provided via a clutch.
23. The height adjustment assembly of any of examples 14 to 21, wherein the height adjustment motor drives a first gear in operable communication with a second gear, the second gear being releasably connected to the height adjustment screw via a connection pin that moves out of a slot in the height adjustment screw responsive to a predetermined amount of force being applied to the connection pin.
24. The height adjustment assembly of any of examples 14 to 21, wherein the height adjustment motor drives a first gear in operable communication with a second gear, the second gear being releasably connected to the height adjustment screw via a spring loaded connection pin that moves out of a slot in the height adjustment screw responsive to a force being applied to the connection pin that is greater than a spring force of the spring being applied to hold the connection pin in the slot.
25. The height adjustment assembly of example 14, wherein the height adjustment assembly further comprises a screw engagement nut operably coupled to the motor bracket, the screw engagement nut having teeth configured to engage threads of the height adjustment screw and, responsive to rotation of the height adjustment screw, move up or down along a length of the height adjustment screw.
26. The height adjustment assembly of example 25, wherein the height adjustment screw comprises at least one stop disposed at an end of a threaded portion of the height adjustment screw, and wherein the height adjustment motor drives a first gear in operable communication with a second gear, the second gear being releasably connected to the height adjustment screw to release responsive to the screw engagement nut reaching the at least one stop.
27. A method of adjusting cutting height for a robotic mower, the method comprising:
   providing a motor bracket that has an adjustable level relative to a chassis of the robotic mower to structurally support a cutting motor of the robotic mower, the motor bracket being supported by a height adjustment screw that is rotatable to adjust the level of the motor bracket;
   monitoring rotation of the height adjustment screw to generate information indicative of an amount of rotation of the height adjustment screw; and
   utilizing processing circuitry to control operation of a height adjustment motor operably coupled to rotate the height adjustment screw based on the received information.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A robotic mower (10) comprising:
a chassis;
a cutting motor (62) driving at least one cutting blade;
a height adjustment assembly (130) including a height adjustment motor (140) configured to adjust a height of a motor bracket (100) via rotation of a height adjustment screw (136) driven by the height adjustment motor (140), the motor bracket (100) providing structural support for the cutting motor (62) at an adjustable level relative to the chassis.

2. The robotic lawnmower of claim 1, wherein the height adjustment screw (136) is configured to rotate about its axis and to remain at a constant vertical position.

3. The robotic lawnmower of any of the preceding claims, wherein the height adjustment assembly comprises a screw engagement nut (210) operably coupled to the motor bracket (100), the screw engagement nut (210) being configured to, responsive to rotation of the height adjustment screw (136), move up or down along a length of the height adjustment screw (136).

4. The robotic lawnmower of any of the preceding claims, further comprising a shaft (112) configured to be turned by the cutting motor (62) and extending linearly therefrom in a direction toward an underside of the robotic mower (10), and a cutting disc (110) disposed at an end of the shaft (112).

5. The robotic lawnmower of any of the preceding claims, wherein the motor bracket (100) is linearly adjustable in a substantially vertical direction along a linear bearing assembly.

6. The robotic lawnmower of any of the preceding claims, further comprising control circuitry (12) configured to control operation of the height adjustment motor (140) for positioning of the motor bracket based at least in part on information received by the control circuitry (12).

7. The robotic lawnmower of claim 6, wherein the control circuitry (12) is configured to direct movement of the height adjustment motor (140) to achieve a desired cutting height based on predefined information correlating a desired cutting height to a determinable position of some components of the robotic lawnmower (10).

8. The robotic lawnmower of any of the preceding claims, wherein the motor bracket (100) is provided with a rack assembly (134) attached thereto in order to enable the rack assembly (134) to ride within grooves of a height adjustment screw (136)

9. The robotic mower of claim 6, wherein the control circuitry is in communication with a calibration system (200) configured to monitor rotation of the height adjustment screw (136) relative to a reference location, and wherein the received information defines the amount of rotation of the height adjustment screw relative to the reference location.

10. The robotic mower of claim 9, wherein the reference location is defined proximate to an end portion of the height adjustment screw.

11. The robotic mower of claim 9, wherein the control circuitry is configured to reset motor bracket height to the end of the height adjustment screw to adjust motor bracket height relative to the reference location each time an adjustment is made to motor bracket height to select a cutting height of the at least one cutting blade.

12. The robotic mower of claim 9, wherein the calibration system comprises a sensor configured to monitor rotation of the height adjustment screw via detection of at least one marking that rotates proportional to rotation of the height adjustment screw.

13. The robotic mower according to any of the previous claims , wherein the height adjustment screw (136) comprises at least one stop (360) disposed at an end of a threaded portion of the height adjustment screw, and wherein the height adjustment motor drives a first gear in operable communication with a second gear, the second gear being releasably connected to the height adjustment screw to release responsive to a screw engagement nut reaching the at least one stop.

14. A method of adjusting a cutting height for a robotic mower comprising a motor bracket that has an adjustable level relative to a chassis of the robotic mower to structurally support a cutting motor of the robotic mower, the motor bracket being supported by a height adjustment screw that is rotatable to adjust the level of the motor bracket, the method comprising:
monitoring rotation of the height adjustment screw to generate information indicative of an amount of rotation of the height adjustment screw; and
utilizing processing circuitry to control operation of a height adjustment motor operably coupled to rotate the height adjustment screw based on the generated information.
